# EUROPÄISCHE PATENTSCHRIFT

(11) **EP 3 368 783 B1**
(45) Veröffentlichungstag und Bekanntmachung des Hinweises auf die Patenterteilung: **23.10.2019**
(21) Anmeldenummer: 16770765.2
(22) Anmeldetag: 26.09.2016
(51) Int. Cl.: F16C 11/06, F16C 11/08

(54) **RADIALKUGELGELENK FÜR EIN FAHRZEUG**
RADIAL BALL JOINT FOR A VEHICLE
JOINT SPHÉRIQUE RADIAL POUR VÉHICULE

(30) Priorität: 28.10.2015 DE 102015221046
(43) Veröffentlichungstag der Anmeldung: 05.09.2018
(73) Patentinhaber: ZF Friedrichshafen AG, 88046 Friedrichshafen (DE)
(72) Erfinder: REDDEHASE, Günter, 49448 Brockum (DE); PETERSEN, Uwe, 32339 Espelkamp (DE); SOKOLIHS, Dirk, 32457 Porta Westfalica (DE); HENSEL, Frank, 32361 Pr. Oldendorf (DE)
(86) Internationale Anmeldenummer: PCT/EP2016/072791
(87) Internationale Veröffentlichungsnummer: WO 2017/071894

(56) Entgegenhaltungen:
- DE-A1- 2 721 159
- DE-A1- 10 361 289
- DE-A1-102005 030 747
- DE-A1-102008 017 953
- DE-C- 582 421
- DE-U1- 29 507 245
- US-A- 4 358 211
- US-A1- 2009 232 589

## Beschreibung

Die Erfindung betrifft ein Radialkugelgelenk für ein Fahrzeug gemäß dem Oberbegriff von Patentanspruch 1.

Radialkugelgelenke für Fahrzeuge, beispielsweise für Lenkstangen von Nutzfahrzeugen, sind aus dem Stand der Technik bekannt und weisen ein Gehäuse zur dreh- und schwenkbeweglichen Aufnahme einer Gelenkkugel eines Kugelzapfens auf. Die Mittelachse des nicht ausgelenkten Kugelzapfens erstreckt sich in Axialrichtung des Radialkugelgelenks, welches für Belastungen senkrecht zur Axialrichtung, also in radialer Richtung, ausgelegt ist. Radialkugelgelenke weisen häufig einen einstückig mit dem Gehäuse ausgebildeten und sich zumindest im Wesentlichen rechtwinklig zu der Axialrichtung von diesem weg erstreckenden Schaft auf, welcher beispielsweise zur Anbindung an eine Lenkstange oder eine Spurstange eines Nutzfahrzeuges vorgesehen ist. Radialkugelgelenke werden häufig auch als Winkelkugelgelenke oder einfach Winkelgelenke bezeichnet.

In der DE 27 21 159 A1 ist ein Radialkugelgelenk mit einem zweiseitig offenen Gehäuse offenbart, wobei eine der beiden Gehäuseöffnungen durch einen in das Gehäuse eingesetzten und mit diesem verbördelten Deckel verschlossen ist. Aus der anderen Gehäuseöffnung heraus erstreckt sich ein Zapfen, welcher einstückig mit der Gelenkkugel ausgebildet ist und zusammen mit dieser den Kugelzapfen bildet. Zwischen einer Innenwandung des Gehäuses und der Gelenkkugel ist anliegend an der Gelenkkugel eine aus Stahlblech gebildete obere Lagerschale zur umfänglichen Gleitlagerung der Gelenkkugel zwischen deren Äquator und deren oberen Pol angeordnet. Die obere Lagerschale überdeckt die Gelenkkugel in einem Bereich, welcher der Oberfläche einer Kugelschicht, auch Kugelzone genannt, mit einer sich in Axialrichtung des Radialkugelgelenks erstreckenden Mittelsenkrechten entspricht. Vor dem Schließen derartiger Radialkugelgelenke werden deren Gehäuse in der Regel mit Schmiermittel befüllt, welches sich im Fahrbetrieb durch Auslenk- und Drehbewegungen des Kugelzapfens auf der Oberfläche der Gelenkkugel verteilen soll.

Ein gattungsgemäßes Radialkugelgelenk ist aus der US 4 358 211 A bekannt.

Aufgabe der Erfindung ist es, in dem Anlagebereich der oberen Lagerschale zu der Gelenkkugel eine verbesserte Schmiermittelversorgung bereitzustellen.

Diese Aufgabe wird gemäß der vorliegenden Erfindung gelöst durch ein gattungsgemäßes Radialkugelgelenk, welches zusätzlich die kennzeichnenden Merkmale des Patentanspruchs 1 aufweist.

Bevorzugte Ausführungsformen und Weiterbildungen sind Gegenstand der Unteransprüche.

Die Erfindung sieht demnach ein Radialkugelgelenk für ein Fahrzeug vor, wobei das Radialkugelgelenk ein Gehäuse zur dreh- und schwenkbeweglichen Aufnahme einer Gelenkkugel eines Kugelzapfens aufweist. Zwischen einer Innenwandung des Gehäuses und der Gelenkkugel ist eine an der Gelenkkugel mit einem Anlagebereich anliegende, ringförmig und umfänglich geschlossen ausgebildete, obere Lagerschale zur umfänglichen Gleitlagerung der Gelenkkugel zwischen deren Äquator und deren oberen Pol angeordnet. Zwischen der oberen Lagerschale, der Innenwandung des Gehäuses und einem das Gehäuse einseitig verschließenden Deckel ist ein jeweils umlaufend anliegender Runddichtring angeordnet. Die obere Lagerschale ist mittels des Runddichtrings in Axialrichtung gegen die Gelenkkugel verspannt. Erfindungsgemäß ist die obere Lagerschale als Ziehteil aus Stahlblech ausgebildet und weist in dem Anlagebereich zu der Gelenkkugel mehrere Schmiernuten auf, welche eine Wandung der oberen Lagerschale nach Art einer Prägung durchsetzen und an dem dem Anlagebereich zu der Gelenkkugel abgewandten Oberflächenbereich der oberen Lagerschale als Aufwölbungen hervortreten, die sich im montierten Zustand des Radialkugelgelenks in den Runddichtring drücken und diesen elastisch verformen, als Verdrehsicherung wirken und eine Verdrehung der oberen Lagerschale gegenüber dem Runddichtring zumindest weitgehend verhindern.

Durch die Schmiernuten wird in dem Anlagebereich der oberen Lagerschale zu der Gelenkkugel eine gute Schmiermittelversorgung bereitgestellt. Die Schmiernuten ermöglichen einerseits einen Schmiermitteltransport innerhalb des Radialkugelgelenks und andererseits eine Schmiermittelversorgung des vorgenannten Anlagebereichs. Durch Dreh- und Schwenkbewegungen des Kugelzapfens gegenüber der oberen Lagerschale erfolgt eine gleichmäßige Verteilung des vorzugsweise fettartigen Schmiermittels in dem Anlagebereich zu der Gelenkkugel.

Die obere Lagerschale ist insbesondere aus umformbarem Stahlblech mit Zieheigenschaften gebildet und weist im Wesentlichen an jeder Stelle die gleiche Wandstärke auf, wobei verfahrensbedingt einzelne Bereiche mit erhöhter Abstreckung während des Ziehvorgangs gegenüber dem Ausgangsmaterial eine etwas geringere Wandstärke aufweisen können. Unter einem Ziehteil im Sinne der Erfindung ist ein Bauteil zu verstehen, das aus einem Stanzteil durch einen Ziehvorgang zumindest im Wesentlichen in dessen Fertigteilgeometrie gebracht wird. Im Gegensatz zu dem bekannten Tiefziehverfahren, bei dem ein sogenannter Niederhalter, welcher auch als Blechhalter oder Ziehring bezeichnet wird, zum Einsatz kommt, ist bei der Herstellung des Ziehteils nach dem Ziehvorgang kein weiteres Beschneiden des Bauteilumfangs erforderlich, um die Fertigteilgeometrie zu erreichen. Daher weist die Fertigteilgeometrie der oberen Lagerschale von der Herstellung des Stanzteils herrührende Schnittkanten auf.

Der Äquator der Gelenkkugel stellt bei Betrachtung in Axialrichtung des Radialkugelgelenks die Umfangslinie der Gelenkkugel mit dem größten Durchmesser dar. Die Mittelsenkrechte der von dieser Umfangslinie umschlossenen Kreisfläche ist deckungsgleich mit der Mittelachse des Kugelzapfens und durchdringt die Oberfläche der Gelenkkugel theoretisch in deren oberen Pol. Da die Gelenkkugel im Bereich des oberen Pols vorzugsweise abgeflacht ausgebildet ist, liegt der obere Pol in diesem Fall außerhalb der tatsächlich vorhandenen Oberfläche der Gelenkkugel. Die obere Lagerschale ist im Gegensatz zu aus dem Stand der Technik bekannten, in Axialrichtung geschlitzten Lagerschalen umfänglich geschlossen ausgebildet.

Erfindungsgemäß treten die mehreren die Wandung der oberen Lagerschale durchsetzenden Schmiernuten an dem dem Anlagebereich zu der Gelenkkugel abgewandten Oberflächenbereich der oberen Lagerschale als Aufwölbungen hervor. Die Schmiernuten, die in einem dem Ziehvorgang nachfolgenden Prägevorgang eingebracht werden, durchsetzen die Wandung der oberen Lagerschale ohne diese trennend zu durchdringen. Die obere Lagerschale weist demzufolge eine geschlossene Umfangsfläche auf. Durch das Prägen erfolgt im Bereich der Schmiernuten eine Verschiebung des Materials der Wandung im Wesentlichen senkrecht zu dem Anlagebereich, mit welchem die obere Lagerschale an der Gelenkkugel anliegt. Dies führt an dem dem Anlagebereich zu der Gelenkkugel abgewandten Oberflächenbereich der oberen Lagerschale zu den Aufwölbungen.

Vorteilhaft erstrecken sich die Schmiernuten in einer durch die Mittelachse des Kugelzapfens verlaufenden Ebene. Insbesondere weist die obere Lagerschale vier auf dem Umfang des Anlagebereichs zur Gelenkkugel gleichmäßig verteilte Schmiernuten auf. Durch die Erstreckung der Schmiernuten in einer durch die Mittelachse des Kugelzapfens verlaufenden Ebene wird der Schmiermitteltransport in Axialrichtung des Radialkugelgelenks gewährleistet.

In vorteilhafter Weiterbildung der Erfindung ist die obere Lagerschale aus Einsatzstahl gebildet und deren Oberfläche vollflächig einsatzgehärtet. Die einsatzgehärtete Oberfläche der oberen Lagerschale bietet in Bezug auf die Relativbewegungen zwischen oberer Lagerschale und Gelenkkugel während des Fahrbetriebs einen hohen Verschleißschutz. Da das aus Einsatzstahl gebildete Blech der oberen Lagerschale verfahrensbedingt auch nach der Einsatzhärtung im Kern weich bleibt, weist die obere Lagerschale eine gewisse Elastizität auf und kann sich so gut an die Oberfläche der Gelenkkugel anschmiegen. Durch den weichen Kern wird darüber hinaus verhindert, dass die obere Lagerschale bei einer Stoßbelastung, wie sie beim Durchfahren eines Schlagloches auftreten kann, nicht bricht. Die im Rahmen einer Einsatzhärtung erreichbare Einhärtetiefe ist größer als die bei anderen Oberflächenhärteverfahren, wie beispielsweise dem Nitrierhärten, erreichbare Einhärtetiefe. Dadurch wird auch bei hohen Belastungen ein Eindrücken der einsatzgehärteten Oberflächenschicht in das demgegenüber relativ weiche Kernmaterial der oberen Lagerschale verhindert. Es ist günstig, wenn die Oberfläche der Gelenkkugel oberflächengehärtet, insbesondere induktionsgehärtet, ausgebildet ist. Bei dieser Konstellation liegt eine geschmierte Gleitreibung zwischen harten Oberflächen vor mit dem Vorteil einer geringen Reibung bei gleichzeitig hohem Verschleißschutz.

Bevorzugt bildet eine dem oberen Pol der Gelenkkugel zugewandte Stirnseite der oberen Lagerschale zusammen mit einer korrespondierenden Anschlagfläche eines das Gehäuse einseitig verschließenden Deckels einen Endanschlag für eine Bewegung der Gelenkkugel in Axialrichtung. Durch die axiale Bewegungsmöglichkeit der Gelenkkugel innerhalb des Gehäuses können unerwünschte Auswirkungen stoßartiger Belastungen des Radialkugelgelenks gering halten werden.

Beispielsweise können von der Fahrbahn auf das Lenkrad eines Nutzfahrzeuges übertragene Stöße abgemildert werden, wenn die Stöße auf deren Weg von der Fahrbahn zu dem Lenkrad über eine Lenkstange geleitet werden, die ein Radialkugelgelenk mit axialer Bewegungsmöglichkeit aufweist. Durch die ringförmige und umfänglich geschlossene Bauweise der oberen Lagerschale weist diese eine hohe Steifigkeit in Axialrichtung des Radialkugelgelenks auf. Darüber hinaus wirken die Schmiernuten der oberen Lagerschale gleichzeitig auch als Versteifungssicken. Der Deckel, welcher bevorzugt konturiert ausgebildet und randseitig umlaufend mit dem Gehäuse verbördelt ist, eignet sich aufgrund seiner Stabilität ebenfalls besonders als Endanschlag. Die dem oberen Pol der Gelenkkugel zugewandte Stirnseite der oberen Lagerschale und die korrespondierende, der Gelenkkugel zugewandte, Anschlagfläche des Deckels sind vorteilhaft zumindest im Wesentlichen senkrecht zu der Axialrichtung des Radialkugelgelenks ausgerichtet.

Gemäß einer vorteilhaften Weiterbildung ist die obere Lagerschale radial beabstandet zu der Innenwandung des Gehäuses angeordnet. Auf diese Weise ist eine ungehinderte Bewegungsmöglichkeit der oberen Lagerschale in Axialrichtung des Radialkugelgelenks gegeben.

Erfindungsgemäß ist zwischen der oberen Lagerschale, der Innenwandung des Gehäuses und dem Deckel ein jeweils umlaufend anliegender Runddichtring angeordnet und die obere Lagerschale mittels des Runddichtrings in Axialrichtung gegen die Gelenkkugel verspannt. Zusammengedrückte Runddichtringe zur Erzeugung einer Verspannkraft zu verwenden, ist günstiger als der Einsatz von aus dem Stand der Technik bekannten Schraubenfedern oder Tellerfedern. Der Runddichtring, der auch als O-Ring bezeichnet wird, weist insbesondere Standardabmessungen auf und ist aus Elastomermaterial mit einer Shore-Härte von beispielsweise 85 bis 90 gebildet. Durch das Verspannen wird verhindert, dass die vorgenannten Bauteile durch im Fahrbetrieb auftretende Schwingungen infolge der axialen Bewegungsmöglichkeit unkontrolliert gegeneinander schlagen und dies zu unerwünschten Klappergeräuschen führt. Durch den verspannten Runddichtring werden darüber hinaus axiale Bewegungen der Gelenkkugel in Richtung des Deckels gedämpft. Der Runddichtring kann bei der zuvor beschriebenen Anordnung in Axialrichtung nur so weit zusammengedrückt werden bis die dem oberen Pol zugewandte Stirnseite der oberen Lagerschale an der der Gelenkkugel zugewandten Innenseite des Deckels anschlägt.

Erfindungsgemäß wirken die Aufwölbungen als Verdrehsicherung und verhindern eine Verdrehung der oberen Lagerschale gegenüber dem Runddichtring zumindest weitgehend. Auf diese Weise erfolgt bei einer Drehung oder Schwenkung des Kugelzapfens nur eine Relativbewegung zwischen der oberen Lagerschale und der Gelenkkugel. Die obere Lagerschale und der Runddichtring verdrehen sich ebenfalls nicht relativ zu dem Gehäuse und dem Deckel. Da sich der Runddichtring relativ zu den Bauteilen, an welchen dieser anliegt, nicht bewegt, unterliegt der Runddichtring praktisch keinem Abrieb. Hierdurch und durch den zuvor beschriebenen Endanschlag, welcher ein übermäßiges und schädigendes Zusammendrücken des Runddichtringes verhindert, erreicht der Runddichtring eine hohe Lebensdauer.

In vorteilhafter Weiterbildung der Erfindung ist zwischen der Innenwandung des Gehäuses und der Gelenkkugel eine jeweils an diesen mit Anlagebereichen anliegende, aus Stahlblech gebildete, untere Lagerschale zur umfänglichen Gleitlagerung der Gelenkkugel im Wesentlichen zwischen deren Äquator und einem mit der Gelenkkugel verbundenen Zapfen angeordnet. Durch die Anlagebereiche der unteren Lagerschale, die einerseits an der Innenwandung des Gehäuses und andererseits an der Gelenkkugel anliegt, ist eine flächige Kraftübertragung von der Gelenkkugel in das Gehäuse gewährleistet. Durch Punkt- oder Linienberührungen hervorgerufene Belastungsspitzen werden so vermieden. Der Zapfen kann einstückig mit der Gelenkkugel ausgebildet sein. Der Zapfen kann auch als separates Bauteil vorliegen, welches beispielsweise durch eine Pressverbindung mit der Gelenkkugel verbunden ist. In diesem Fall spricht man von einem gebauten Kugelzapfen. Zusammen bilden der Zapfen und die Gelenkkugel den Kugelzapfen. Die untere Lagerschale ist insbesondere ebenso wie die obere Lagerschale aus Einsatzstahl gebildet und vollflächig einsatzgehärtet.

Zweckmäßig ist die untere Lagerschale als ringförmiges, umfänglich geschlossenes Ziehteil ausgebildet und weist in dem Anlagebereich zu der Gelenkkugel mehrere Schmiernuten auf, welche sich in einer durch die Mittelachse des Kugelzapfens verlaufenden Ebene erstrecken. In Verbindung mit der Anordnung der Schmiernuten in der oberen Lagerschale wird auf diese Weise eine umfängliche Versorgung der Gelenkkugel und der beiden daran anliegenden Lagerschalen gewährleistet. Insbesondere weist die untere ebenso wie die obere Lagerschale vier auf dem Umfang des Anlagebereichs zu der Gelenkkugel gleichmäßig verteilte Schmiernuten auf.

Vorteilhaft ist die untere Lagerschale in dem Anlagebereich zu der Innenwandung des Gehäuses zumindest abschnittsweise als in Umfangsrichtung durchgehende Kugelmantelfläche ausgebildet. Mit einer durchgehenden Kugelmantelfläche ist in diesem Zusammenhang gemeint, dass die Schmiernuten der unteren Lagerschale im Gegensatz zu den Schmiernuten der oberen Lagerschale nicht die Wandung der unteren Lagerschale durchsetzen und somit den in Umfangsrichtung durchgehenden Verlauf des Anlagebereichs zu der Innenwandung des Gehäuses unterbrechen. Insbesondere liegt der Anlagebereich der unteren Lagerschale zu der Innenwandung des Gehäuses vollflächig an der Innenwandung des Gehäuses an. Da der Anlagebereich nicht von Schmiernuten durchsetzt ist, kann die Fertigstellung der Innenwandung des vorzugsweise gegossenen oder geschmiedeten Gehäuses relativ einfach durch eine spanende Bearbeitung erfolgen. Würde der Anlagebereich analog zu der oberen Lagerschale Aufwölbungen aufweisen, müssten in der Innenwandung des Gehäuses Freimachungen zur Aufnahme solcher Aufwölbungen vorgesehen werden. Dies würde die Fertigstellung der Innenwandung des Gehäuses in dem Anlagebereich zu der unteren Lagerschale verteuern und die zur Kraftübertragung von der unteren Lagerschale auf das Gehäuse zur Verfügung stehende Fläche verringern, was in dem Anlagebereich zu einer erhöhten Flächenpressung führen würde.

Gemäß einer Weiterbildung der Erfindung sind die Schmiernuten nach Art einer Prägung spanlos in eine Wandung der unteren Lagerschale eingebracht. Spanlos durch Prägen geformte Schmiernuten haben gegenüber zerspanend hergestellten den Vorteil, dass die Werkstofffasern durch die Bearbeitung nicht durchtrennt werden. Dadurch weisen Lagerschalen mit geprägten Schmiernuten eine erhöhte Dauerhaltbarkeit auf. Darüber hinaus ist das Einprägen der Schmiernuten kostengünstiger als beispielsweise eine Herstellung durch Fräsen.

Bevorzugt erstreckt sich die untere Lagerschale in Richtung des oberen Pols der Gelenkkugel bis über den Äquator der Gelenkkugel hinaus. Durch die zuvor beschriebene Bewegungsmöglichkeit des Kugelzapfens in Axialrichtung kann die Gelenkkugel im Fahrbetrieb ihren Lagersitz in der unteren Lagerschale verlassen und sich axial in Richtung des Deckels verlagern. Die Erstreckung der unteren Lagerschale axial in Richtung des oberen Pols der Gelenkkugel ist erforderlich, damit auch in diesem Zustand die überwiegend senkrecht zu der Axialrichtung wirkenden Lagerkräfte durch die untere Lagerschale aufgenommen werden können. Der Abschnitt der unteren Lagerschale, welcher sich axial über den Äquator hinaus in Richtung des oberen Pols erstreckt, ist insbesondere hohlzylindrisch ausgebildet, um einen Durchgang bereitzustellen, durch welchen die Gelenkkugel im Rahmen der Montage in die untere Lagerschale eingesetzt werden kann. Vorteilhaft ist eine dem oberen Pol der Gelenkkugel zugewandte Stirnseite der unteren Lagerschale spanend bearbeitet, um ein Volumen des Ziehteils abzutragen, das verfahrensbedingt nicht genutzt werden kann. Daher kann die Stirnseite von einer spanenden Bearbeitung herrührende Bearbeitungsspuren aufweisen, insbesondere von einer Drehbearbeitung stammende, konzentrisch angeordnete Bearbeitungsriefen.

In einer vorteilhaften Ausführung der Erfindung weist das Radialkugelgelenk eine Durchlaufschmierung auf mit einem Schmiermitteleintritt über einen Schmiernippel und einem Schmiermittelaustritt über eine oder mehrere Austrittsöffnungen in einem das Radialkugelgelenk abdichtenden und sich zwischen dem Gehäuse und dem Kugelzapfen erstreckenden Dichtungsbalg. Unter einer Durchlaufschmierung im Sinne der Erfindung ist zu verstehen, dass den Lagerstellen zwischen Gelenkkugel und oberer sowie unterer Lagerschale stets frisches Schmiermittel, insbesondere Schmierfett, zugeführt wird und verbrauchtes Schmiermittel über die Austrittsöffnungen ausgeleitet wird. Das Schmiermittel wird beispielsweise mittels einer Fettpresse in den Schmiernippel gedrückt, wobei nachrückendes Schmiermittel das bereits in dem Radiallager vorhandene Schmiermittel in Richtung des Dichtungsbalges drückt.

Vorteilhaft ist der Schmiernippel zentral mit Erstreckung in Axialrichtung in dem Deckel oder seitlich in dem Gehäuse angeordnet, wobei die untere Lagerschale bei seitlich angeordnetem Schmiernippel im Bereich zumindest einer Schmiernut eine Ausnehmung aufweist, um einen Schmiermitteleintritt zu ermöglichen. Die Lage des Schmiernippels kann in Abhängigkeit von den Bauraumverhältnissen am Einbauort gewählt werden.

Gemäß einer alternativen Ausgestaltung der Erfindung ist das Radialkugelgelenk wartungsfrei ausgebildet. Das wartungsfreie Radialkugelgelenk wird während der Montage einmalig mit einer Fettbefüllung versehen, die als ausreichend für die voraussichtliche Lebensdauer ausgelegt ist. Daher kann bei dem wartungsfrei ausgebildeten Radialkugelgelenk auf ein regelmäßiges Nachschmieren verzichtet werden. Äußerlich ist das wartungsfreie Radialkugelgelenk daran zu erkennen, dass es keinen Schmiernippel oder eine ähnliche Schmiermittelzuführungseinrichtung aufweist.

Das beschriebene Radialkugelgelenk lässt sich vorteilhaft an einem als Lenkstange, Spurstange, Stabilisator-Verbindungsstange, Bediengestänge oder Panhardstab ausgeführten Zweipunktlenker einsetzen.

Im Folgenden wird die Erfindung anhand lediglich Ausführungsbeispiele darstellender Zeichnungen näher erläutert, wobei sich gleiche Bezugszeichen auf gleiche Bauteile oder Elemente beziehen. Dabei zeigt:
- Fig. 1: in einer perspektivischen Darstellung ein Radialkugelgelenk gemäß einer ersten Ausführungsform der Erfindung;
- Fig. 2: in einer teilweise geschnittenen Darstellung das Radialkugelgelenk aus Figur 1 in einem vormontierten Zustand;
- Fig. 3: in einer Schnittdarstellung einen Teil des Radialkugelgelenks aus Figur 2 in einem fertig montierten Zustand;
- Fig. 4: in einer perspektivischen Darstellung eine obere Lagerschale des Radialkugelgelenks gemäß der ersten Ausführungsform;
- Fig. 5: in einer perspektivischen Darstellung eine untere Lagerschale des Radialkugelgelenks gemäß der ersten Ausführungsform;
- Fig. 6: in einer perspektivischen Darstellung ein Radialkugelgelenk gemäß einer zweiten Ausführungsform der Erfindung;
- Fig. 7: in einer perspektivischen Darstellung eine untere Lagerschale des Radialkugelgelenks gemäß der zweiten Ausführungsform und
- Fig. 8: in einer perspektivischen Darstellung ein Radialkugelgelenk gemäß einer dritten Ausführungsform der Erfindung.

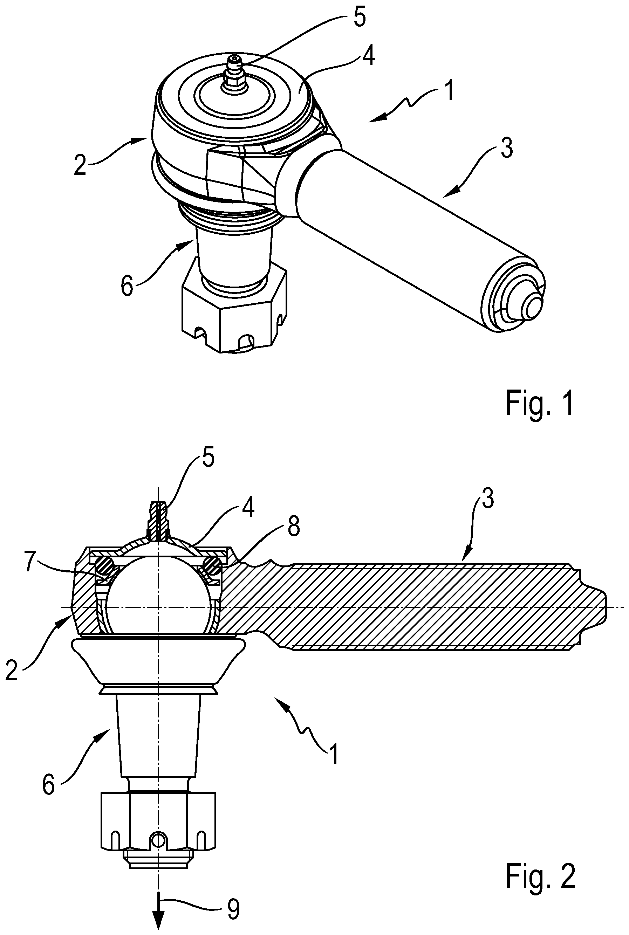

Fig. 1 zeigt ein Radialkugelgelenk 1, welches ein Gehäuse 2 und einen einstückig mit diesem ausgebildeten Schaft 3 zur Anbindung des Radialkugelgelenks an ein weiteres Fahrzeugbauteil aufweist, wie beispielsweise eine Lenkstange oder eine Spurstange. Das Gehäuse 2 weist zwei Gehäuseöffnungen auf, wobei die erste durch einen eingebördelten Deckel 4 verschlossen ist. Mittig in dem kreisrund ausgebildeten Deckel 4 ist ein Schmiernippel 5 zur Versorgung des Radialkugelgelenks 1 mit Schmiermittel eingesetzt. Aus der zweiten Gehäuseöffnung, die gegenüberliegend zu der ersten Gehäuseöffnung angeordnet ist, erstreckt sich ein Kugelzapfen 6.

In Fig. 2 ist zwischen dem Deckel 4 und einer oberen Lagerschale 7 ein Runddichtring 8 zu erkennen, welcher unbelastet ist und in diesem Zustand eine kreisrunde Querschnittsform aufweist. Der Kugelzapfen 6 ist nicht ausgelenkt und erstreckt sich in Axialrichtung 9 des Radialkugelgelenks 1. Der Deckel 4 ist für eine Verbördelung mit dem Gehäuse 2 vorgesehen; muss aber noch in Axialrichtung 9 des Radialkugelgelenks 1 bis zu einem Anschlag am Gehäuse 2 verlagert werden, um seine Fügeposition zu erreichen. Durch die Verlagerung des Deckels 4 in die Fügeposition wird der Runddichtring 8, der auch als O-Ring bezeichnet wird, zusammengedrückt. Im Rahmen des Verbördelns wird ein umlaufender Bördelrand des Gehäuses 2 über den Rand des Deckels 4 gelegt.

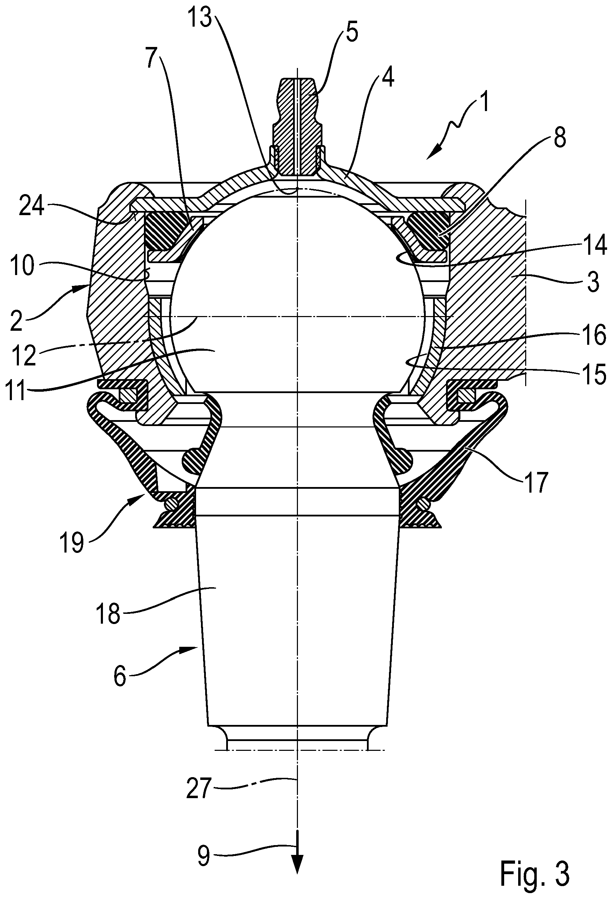

Der mit dem Gehäuse 2 verbördelte Deckel 4 sowie der zwischen dem Deckel 4 und der oberen Lagerschale 7 zusammengedrückte Runddichtring 8 sind in Fig. 3 zu erkennen. Zwischen einer Innenwandung 10 des Gehäuses 2 und einer in dem Gehäuse 2 dreh- und schwenkbeweglich gelagerten Gelenkkugel 11 ist anliegend an der Gelenkkugel 11 die obere Lagerschale 7 zur umfänglichen Gleitlagerung der Gelenkkugel 11 zwischen deren Äquator 12 und deren oberen Pol 13 angeordnet. Die obere Lagerschale 7, welche aus Einsatzstahlblech gebildet und vollflächig einsatzgehärtet ist, überdeckt die Gelenkkugel 11 in einem Bereich, welcher der Oberfläche einer Kugelschicht mit einer sich in Axialrichtung 9 des Radialkugelgelenks 1 erstreckenden Mittelsenkrechten entspricht. Der Äquator 12 stellt bei Betrachtung in Axialrichtung 9 die Umfangslinie der Gelenkkugel 11 mit dem größten Durchmesser dar. Die Mittelsenkrechte der von der Umfangslinie umschlossenen Kreisfläche ist deckungsgleich mit der Mittelachse 27 des Kugelzapfens 6 und durchdringt die Oberfläche der Gelenkkugel 11 theoretisch in dem oberen Pol 13. Da die Gelenkkugel 11 im Bereich eines oberen Pols 13 abgeflacht ausgebildet ist, liegt der obere Pol 13 nicht in der tatsächlich vorhandenen Oberfläche der Gelenkkugel 11.

Über den Schmiernippel 5 in das Gehäuse 2 eingebrachtes Schmiermittel, insbesondere Schmierfett, wird entlang der Oberfläche der Gelenkkugel 11 in Axialrichtung 9 zunächst durch Schmiernuten 14 der oberen Lagerschale 7 und anschließend durch Schmiernuten 15 einer unteren Lagerschale 16 gedrückt. Sowohl die Schmiernuten 14 der oberen Lagerschale 7 als auch die Schmiernuten 15 der unteren Lagerschale 16 erstrecken sich in einer durch die Mittelachse 27 des Kugelzapfens 6 verlaufenden Ebene. Wird weiteres Schmiermittel eingebracht, so sammelt sich das zunächst eingebrachte Schmiermittel in einem Dichtungsbalg 17. Der Dichtungsbalg 17 dichtet das Radialkugelgelenk 1 ab und erstreckt sich zwischen dem Gehäuse 2 und dem Zapfen 18, welcher einstückig mit der Gelenkkugel 11 ausgebildet ist und zusammen mit dieser den Kugelzapfen 6 bildet. Ist der Dichtungsbalg 17 mit Schmiermittel gefüllt, kann überschüssiges Schmiermittel über drei auf dem Umfang des Dichtungsbalges gleichmäßig verteilte Austrittsöffnungen 19 austreten. Die zuvor beschriebene Art der Schmiermittelversorgung wird hier als Durchlaufschmierung bezeichnet und gewährleistet eine Versorgung der Lagerstellen zwischen Gelenkkugel 11 und oberer 7 sowie unterer Lagerschale 16 mit frischem Schmierfett und einen Austrag verunreinigten Schmierfettes aus den Austrittsöffnungen 19.

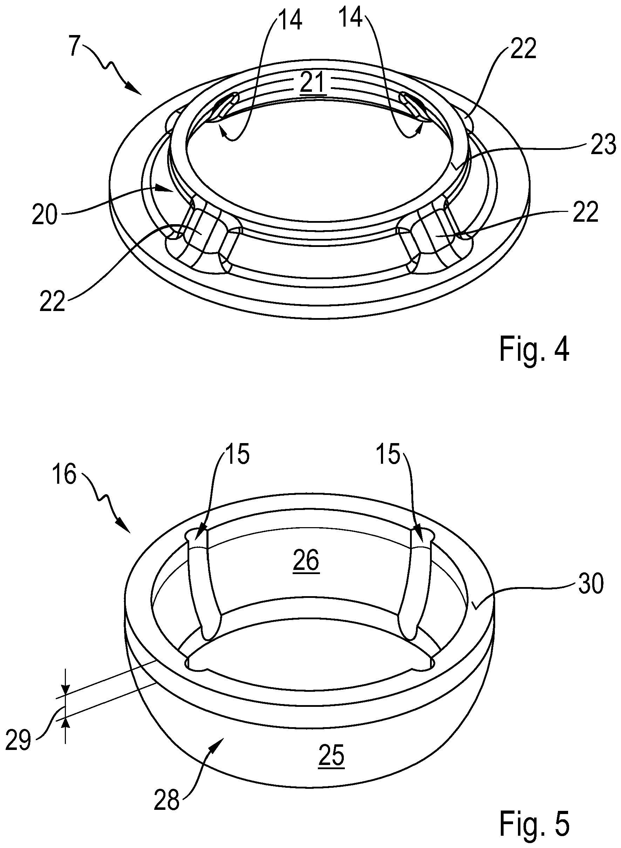

In Fig. 4 sind vier Schmiernuten 14 zu erkennen, welche eine Wandung 20 der oberen Lagerschale 7 nach Art einer Prägung durchsetzen und sich in einer durch die Mittelachse 27 des Kugelzapfens 6 verlaufenden Ebene erstrecken. Die Schmiernuten 14 sind in einem Anlagebereich 21 der oberen Lagerschale 7 zu der Gelenkkugel 11 eingeprägt und weisen jeweils eine Nutgrundfläche auf, welche sich zumindest im Wesentlichen parallel zu der Oberfläche der Gelenkkugel 11 erstreckt. Die vier Schmiernuten 14, welche die Wandung 20 durchsetzen, treten an dem dem Anlagebereich 21 zu der Gelenkkugel 11 abgewandten Oberflächenbereich der oberen Lagerschale 7 als Aufwölbungen 22 hervor. Die Schmiernuten 14, die in einem Prägevorgang eingebracht werden, durchsetzen die Wandung 20 der oberen Lagerschale 7 ohne diese trennend zu durchdringen. Die obere Lagerschale 7 weist demzufolge eine geschlossene Umfangsfläche auf. Durch das Prägen erfolgt im Bereich der Schmiernuten 14 eine Verschiebung des Materials der Wandung 20 im Wesentlichen senkrecht zu dem Anlagebereich 21, mit welchem die obere Lagerschale 7 an der Gelenkkugel 11 anliegt. Dies führt an dem dem Anlagebereich 21 zur Gelenkkugel 11 abgewandten Oberflächenbereich der oberen Lagerschale 7 zu den Aufwölbungen 22.

Die Aufwölbungen 22 drücken sich im montierten Zustand des Radialkugelgelenks 1 in den Runddichtring 8 und verformen diesen elastisch. Auf diese Weise wird im Fahrbetrieb eine Verdrehung des Runddichtrings 8 gegenüber der oberen Lagerschale 7 zumindest im Wesentlichen verhindert. Eine dem oberen Pol 13 der Gelenkkugel 11 zugewandte Stirnseite 23 der oberen Lagerschale 7 bildet zusammen mit einer korrespondierenden Anschlagfläche 24 des Deckels 4 einen Endanschlag für eine Bewegung der Gelenkkugel 11 in Axialrichtung 9 des Radialkugelgelenks 1. Der Deckel 4 ist konturiert ausgebildet und randseitig umlaufend mit dem Gehäuse 2 verbördelt. Die Stirnseite 23 der oberen Lagerschale 7 und die korrespondierende, der Gelenkkugel 11 zugewandte, Anschlagfläche 24 des Deckels 4 sind vorteilhaft zumindest im Wesentlichen senkrecht zu der Axialrichtung 9 des Radialkugelgelenks 1 ausgerichtet.

Fig. 5 zeigt die zwischen der Innenwandung 10 des Gehäuses 2 und der Gelenkkugel 11 angeordnete und jeweils an diesen mit Anlagebereichen 25, 26 anliegende, untere Lagerschale 16. Die untere Lagerschale 16 ist ebenso wie die obere Lagerschale 7 aus vollflächig einsatzgehärtetem Stahlblech gebildet und dient der umfänglichen Gleitlagerung der Gelenkkugel 11 im Wesentlichen zwischen deren Äquator 12 und dem einstückig mit der Gelenkkugel 11 ausgebildeten Zapfen 18. Durch die Anlagebereiche 25, 26 der unteren Lagerschale 16, die einerseits an der Innenwandung 10 des Gehäuses 2 und andererseits an der Gelenkkugel 11 anliegen, ist eine flächige Kraftübertragung von der Gelenkkugel 11 in das Gehäuse 2 gewährleistet. Die untere Lagerschale 16 ist in dem Anlagebereich 25 zu der Innenwandung 10 des Gehäuses 2 von deren Unterseite bis zum Äquator 12 der Gelenkkugel 11 als in Umfangsrichtung unterbrechungsfrei durchgehende Kugelmantelfläche ausgebildet, welche vollflächig an der Innenwandung 10 des Gehäuses 2 anliegt. Weiterhin ist die untere Lagerschale 16 als ringförmiges, umfänglich geschlossenes Ziehteil ausgebildet und weist in dem Anlagebereich 26 zu der Gelenkkugel 11, ebenso wie die obere Lagerschale 7, vier Schmiernuten 15 auf, welche sich in einer durch die Mittelachse 27 des Kugelzapfens 6 verlaufenden Ebene erstrecken.

Die vier Schmiernuten 15 der unteren Lagerschale 16 sind nach Art einer Prägung spanlos in eine Wandung 28 der unteren Lagerschale 16 eingebracht. Die untere Lagerschale 16 erstreckt sich mit einem hohlzylindrischen Abschnitt 29 axial in Richtung des oberen Pols 13 der Gelenkkugel 11 über deren Äquator 12 hinaus. Durch den hohlzylindrischen Abschnitt 29 hindurch kann die Gelenkkugel 11 im Rahmen der Montage in Axialrichtung 9 in die untere Lagerschale 16 eingesetzt werden. Durch die Erstreckung der unteren Lagerschale 16 in Axialrichtung 9 über den Äquator 12 der Gelenkkugel 11 hinaus in Richtung des oberen Pols 13 ist es möglich, auch bei einer axialen Verlagerung der Gelenkkugel 11 während des Fahrbetriebs die überwiegend senkrecht zu der Axialrichtung 9 wirkenden Lagerkräfte durch die untere Lagerschale 16 aufzunehmen. Wenn die Gelenkkugel 11 im Fahrbetrieb ihren Lagersitz in der unteren Lagerschale 16 verlässt und sich axial in Richtung des Deckels 4 verlagert, werden die Lagerkräfte über den ebenfalls an der Innenwandung 10 des Gehäuses 2 anliegenden hohlzylindrischen Bereich 29 der unteren Lagerschale 16 in das Gehäuse 2 eingeleitet. Eine dem oberen Pol 13 der Gelenkkugel 11 zugewandte Stirnseite 30 der unteren Lagerschale ist spanend bearbeitet und weist von einer Drehbearbeitung herrührende, konzentrisch angeordnete Bearbeitungsriefen auf.

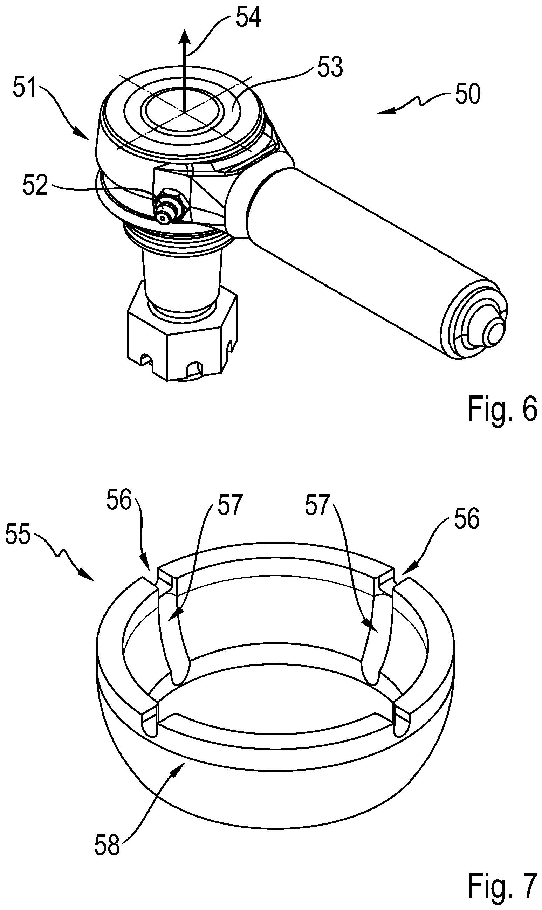

Fig. 6 zeigt ein Radialkugelgelenk 50, welches sich von dem zuvor beschriebenen Radialkugelgelenk 1 durch ein Gehäuse 51 unterscheidet, in welches seitlich ein Schmiernippel 52 eingebracht ist. Aufgrund der seitlichen Schmierstoffzufuhr weist das Radialkugelgelenk 50 gemäß der zweiten Ausführungsform einen geschlossenen Deckel 53 auf. Die untere Lagerschale 16 der ersten Ausführungsform kann bei der zweiten Ausführungsform nicht verwendet werden, weil die Wandung 28 der zunächst vorgestellten unteren Lagerschale 16 eine Zufuhr von Schmiermittel in das Gehäuse 51 versperren würde. Daher wird bei dem Gehäuse 51 eine in Fig. 7 gezeigte untere Lagerschale 55 mit Ausnehmungen 56 verwendet, um eine ungehinderte Schmiermittelzufuhr zu ermöglichen. Die untere Lagerschale 55 weist analog zu der bereits beschriebenen unteren Lagerschale 16 ebenfalls vier Schmiernuten 57 auf, an deren dem Deckel 53 zugewandten Enden jeweils die Ausnehmung 56 angeordnet ist, welche eine Wandung 58 der unteren Lagerschale 55 in diesem Bereich durchsetzt. Ansonsten ist das Radialkugelgelenk 50 gemäß der zweiten Ausführungsform baugleich mit dem Radialkugelgelenk 1 der ersten Ausführungsform.

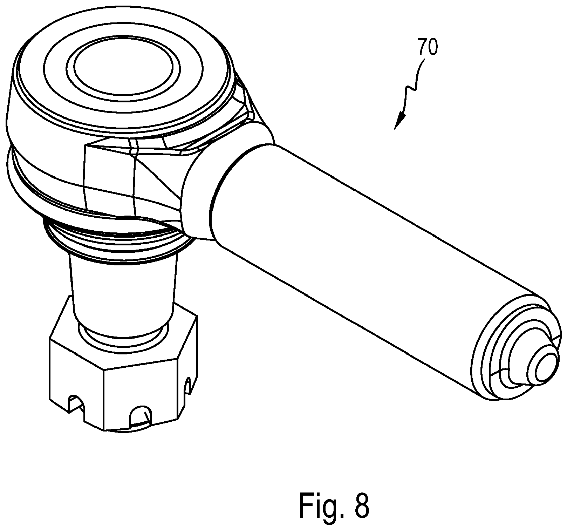

Fig. 8 zeigt ein wartungsfrei ausgebildetes Radialkugelgelenk 70, welches während der Montage einmalig mit einer Fettbefüllung versehen wurde, die als ausreichend für die voraussichtliche Lebensdauer ausgelegt ist.

### Bezugszeichen

- 1: Radialkugelgelenk
- 2: Gehäuse
- 3: Schaft
- 4: Deckel
- 5: Schmiernippel
- 6: Kugelzapfen
- 7: obere Lagerschale
- 8: Runddichtring
- 9: Axialrichtung des Radialkugelgelenks
- 10: Innenwandung des Gehäuses
- 11: Gelenkkugel
- 12: Äquator der Gelenkkugel
- 13: oberer Pol der Gelenkkugel
- 14: Schmiernut in der oberen Lagerschale
- 15: Schmiernut in der unteren Lagerschale
- 16: untere Lagerschale
- 17: Dichtungsbalg
- 18: Zapfen
- 19: Austrittsöffnung
- 20: Wandung der oberen Lagerschale
- 21: Anlagebereich zu der Gelenkkugel
- 22: Aufwölbung
- 23: Stirnseite der oberen Lagerschale
- 24: Anschlagfläche des Deckels
- 25: Anlagebereich zu der Innenwandung des Gehäuses
- 26: Anlagebereich zu der Gelenkkugel
- 27: Mittelachse des Kugelzapfens
- 28: Wandung der unteren Lagerschale
- 29: hohlzylindrischer Abschnitt der unteren Lagerschale
- 30: Stirnseite der unteren Lagerschale
- 50: Radialkugelgelenk
- 51: Gehäuse
- 52: Schmiernippel
- 53: Deckel
- 54: Axialrichtung des Radialkugelgelenks
- 55: untere Lagerschale
- 56: Ausnehmung in der unteren Lagerschale
- 57: Schmiernut in der unteren Lagerschale
- 58: Wandung der unteren Lagerschale

- 70: Radialkugelgelenk

## Patentansprüche

1. Radialkugelgelenk (1, 50, 70) für ein Fahrzeug, das Radialkugelgelenk (1, 50, 70) aufweisend ein Gehäuse (2, 51) zur dreh- und schwenkbeweglichen Aufnahme einer Gelenkkugel (11) eines Kugelzapfens (6), wobei zwischen einer Innenwandung (10) des Gehäuses (2, 51) und der Gelenkkugel (11) eine an der Gelenkkugel (11) mit einem Anlagebereich (21) anliegende, ringförmig und umfänglich geschlossen ausgebildete, obere Lagerschale (7) zur umfänglichen Gleitlagerung der Gelenkkugel (11) zwischen deren Äquator (12) und deren oberen Pol (13) angeordnet ist, wobei zwischen der oberen Lagerschale (7), der Innenwandung (10) des Gehäuses (2, 51) und einem das Gehäuse (2, 51) einseitig verschließenden Deckel (4, 53) ein jeweils umlaufend anliegender Runddichtring (8) angeordnet ist und wobei die obere Lagerschale (7) mittels des Runddichtrings (8) in Axialrichtung (9) gegen die Gelenkkugel (11) verspannt ist, **dadurch gekennzeichnet, dass** die obere Lagerschale (7) als Ziehteil aus Stahlblech ausgebildet ist und in dem Anlagebereich (21) zu der Gelenkkugel (11) mehrere Schmiernuten (14) aufweist, welche eine Wandung (20) der oberen Lagerschale (7) nach Art einer Prägung durchsetzen und an dem dem Anlagebereich (21) zu der Gelenkkugel (11) abgewandten Oberflächenbereich der oberen Lagerschale (7) als Aufwölbungen (22) hervortreten, die sich im montierten Zustand des Radialkugelgelenks (1) in den Runddichtring (8) drücken und diesen elastisch verformen, als Verdrehsicherung wirken und eine Verdrehung der oberen Lagerschale (7) gegenüber dem Runddichtring (8) zumindest weitgehend verhindern.

2. Radialkugelgelenk (1, 50, 70) nach Anspruch 1, **dadurch gekennzeichnet, dass** die obere Lagerschale (7) im Wesentlichen an jeder Stelle die gleiche Wandstärke aufweist.

3. Radialkugelgelenk (1, 50, 70) nach Anspruch 1 oder 2, **dadurch gekennzeichnet, dass** sich die Schmiernuten (14) in einer durch die Mittelachse (27) des Kugelzapfens (6) verlaufenden Ebene erstrecken.

4. Radialkugelgelenk (1, 50, 70) nach einem der Ansprüche 1 bis 3, **dadurch gekennzeichnet, dass** die obere Lagerschale (7) aus Einsatzstahl gebildet ist und deren Oberfläche vollflächig einsatzgehärtet ist.

5. Radialkugelgelenk (1, 50, 70) nach einem der vorhergehenden Ansprüche, **dadurch gekennzeichnet, dass** eine dem oberen Pol (13) der Gelenkkugel (11) zugewandte Stirnseite (23) der oberen Lagerschale (7) zusammen mit einer korrespondierenden Anschlagfläche (24) des das Gehäuse (2, 51) einseitig verschließenden Deckels (4, 53) einen Endanschlag für eine Bewegung der Gelenkkugel (11) in Axialrichtung (9) bildet.

6. Radialkugelgelenk (1, 50, 70) nach Anspruch 5, **dadurch gekennzeichnet, dass** die obere Lagerschale (7) radial beabstandet zu der Innenwandung (10) des Gehäuses (2, 51) angeordnet ist.

7. Radialkugelgelenk (1, 50, 70) nach einem der vorhergehenden Ansprüche, **dadurch gekennzeichnet, dass** zwischen der Innenwandung (10) des Gehäuses (2) und der Gelenkkugel (11) eine jeweils an diesen mit Anlagebereichen (25, 26) anliegende, aus Stahlblech gebildete, untere Lagerschale (16) zur umfänglichen Gleitlagerung der Gelenkkugel (11) im Wesentlichen zwischen deren Äquator (12) und einem mit der Gelenkkugel (11) verbundenen Zapfen (18) angeordnet ist.

8. Radialkugelgelenk (1, 50, 70) nach Anspruch 7, **dadurch gekennzeichnet, dass** die untere Lagerschale (16) als ringförmiges, umfänglich geschlossenes Ziehteil ausgebildet ist und in dem Anlagebereich (26) zu der Gelenkkugel mehrere Schmiernuten (15) aufweist, welche sich in einer durch die Mittelachse (27) des Kugelzapfens (6) verlaufenden Ebene erstrecken.

9. Radialkugelgelenk (1, 50, 70) nach Anspruch 7 oder 8, **dadurch gekennzeichnet, dass** die untere Lagerschale (16) in dem Anlagebereich (25) zu der Innenwandung (10) des Gehäuses (2) zumindest abschnittsweise als in Umfangsrichtung durchgehende Kugelmantelfläche ausgebildet ist.

10. Radialkugelgelenk (1, 50, 70) nach Anspruch 8 oder 9, **dadurch gekennzeichnet, dass** die Schmiernuten (15) nach Art einer Prägung spanlos in eine Wandung (28) der unteren Lagerschale (16) eingebracht sind.

11. Radialkugelgelenk (1, 50, 70) nach einem der Ansprüche 7 bis 10, **dadurch gekennzeichnet, dass** sich die untere Lagerschale (16) in Richtung des oberen Pols (13) der Gelenkkugel (11) bis über den Äquator (12) der Gelenkkugel (11) hinaus erstreckt.

12. Radialkugelgelenk (1, 50) nach einem der vorhergehenden Ansprüche, **dadurch gekennzeichnet, dass** das Radialkugelgelenk (1, 50) eine Durchlaufschmierung aufweist mit einem Schmiermitteleintritt über einen Schmiernippel (5, 52) und einem Schmiermittelaustritt über eine oder mehrere Austrittsöffnungen (19) in einem das Radialkugelgelenk (1, 50) abdichtenden und sich zwischen dem Gehäuse (2, 51) und dem Kugelzapfen (6) erstreckenden Dichtungsbalg (17).

13. Radialkugelgelenk (1, 50) nach Anspruch 12, **dadurch gekennzeichnet, dass** der Schmiernippel (5) zentral mit Erstreckung in Axialrichtung (9) in dem Deckel (4) oder seitlich in dem Gehäuse (51) angeordnet ist, wobei die untere Lagerschale (55) bei seitlich angeordnetem Schmiernippel (52) im Bereich zumindest einer Schmiernut (57) eine Ausnehmung (56) aufweist, um einen Schmiermitteleintritt zu ermöglichen.

14. Radialkugelgelenk (70) nach einem der Ansprüche 1 bis 11, **dadurch gekennzeichnet, dass** das Radialkugelgelenk (70) wartungsfrei ausgebildet ist.

## Claims

1. Radial ball joint (1, 50, 70) for a vehicle, the radial ball joint (1, 50, 70) having a housing (2, 51) for receiving a joint ball (11) of a ball pivot (6) in a rotationally and pivotably movable manner, an upper bearing shell (7) which bears against the joint ball (11) by way of a contact region (21) and is of annularly and circumferentially closed configuration being arranged between an inner wall (10) of the housing (2, 51) and the joint ball (11) for circumferentially plain mounting the joint ball (11) between its equator (12) and its upper pole (13), a round sealing ring (8) which bears in each case circumferentially being arranged between the upper bearing shell (7), the inner wall (10) of the housing (2, 51) and a cover (4, 53) which closes the housing (2, 51) on one side, and the upper bearing shell (7) being braced in the axial direction (9) against the joint ball (11) by means of the round sealing ring (8), **characterized in that** the upper bearing shell (7) is configured as a drawn part from steel sheet, and has a plurality of lubricating grooves (14) in the contact region (21) with the joint ball (11), which lubricating grooves (14) penetrate a wall (20) of the upper bearing shell (7) in the manner of an embossed portion and protrude as bulges (22) on that surface region of the upper bearing shell (7) which faces away from the contact region (21) with the joint ball (11), which bulges (22) press into the round sealing ring (8) and deform it elastically in the assembled state of the radial ball bearing (1), act as an anti-rotation safeguard, and at least largely prevent a rotation of the upper bearing shell (7) with respect to the round sealing ring (8).

2. Radial ball joint (1, 50, 70) according to Claim 1, **characterized in that** the upper bearing shell (7) has the same wall thickness substantially at every point.

3. Radial ball joint (1, 50, 70) according to Claim 1 or 2, **characterized in that** the lubricating grooves (14) extend in a plane which runs through the centre axis (27) of the ball pivot (6).

4. Radial ball joint (1, 50, 70) according to one of Claims 1 to 3, **characterized in that** the upper bearing shell (7) is formed from case-hardened steel, and the surface thereof is case-hardened over the full surface area.

5. Radial ball joint (1, 50, 70) according to one of the preceding claims, **characterized in that** an end side (23) of the upper bearing shell (7), which end side (23) faces the upper pole (13) of the joint ball (11), forms an end stop, together with a corresponding stop face (24) of the cover (4, 53) which closes the housing (2, 51) on one side, for a movement of the joint ball (11) in the axial direction (9).

6. Radial ball joint (1, 50, 70) according to Claim 5, **characterized in that** the upper bearing shell (7) is arranged spaced apart radially from the inner wall (10) of the housing (2, 51).

7. Radial ball joint (1, 50, 70) according to one of the preceding claims, **characterized in that** arranged between the inner wall (10) of the housing (2) and the joint ball (11) is a lower bearing shell (16) which bears in each case against them by way of contact regions (25, 26) and is formed from steel sheet, for circumferentially plane mounting the joint ball (11) substantially between its equator (12) and a pivot (18) which is connected to the joint ball (11).

8. Radial ball joint (1, 50, 70) according to Claim 7, **characterized in that** the lower bearing shell (16) is configured as an annular, circumferentially closed drawn part, and has a plurality of lubricating grooves (15) in the contact region (26) with the joint ball, which lubricating grooves (15) extend in a plane which runs through the centre axis (27) of the ball pivot (6).

9. Radial ball joint (1, 50, 70) according to Claim 7 or 8, **characterized in that**, in the contact region (25) with the inner wall (10) of the housing (2), the lower bearing shell (16) is configured at least in sections as a continuous ball shell face in the circumferential direction.

10. Radial ball joint (1, 50, 70) according to Claim 8 or 9, **characterized in that** the lubricating grooves (15) are made in a wall (28) of the lower bearing shell (16) without cutting in the manner of an embossed portion.

11. Radial ball joint (1, 50, 70) according to one of Claims 7 to 10, **characterized in that** the lower bearing shell (16) extends in the direction of the upper pole (13) of the joint ball (11) beyond the equator (12) of the joint ball (11).

12. Radial ball joint (1, 50) according to one of the preceding claims, **characterized in that** the radial ball joint (1, 50) has a continuous lubrication means with a lubricant inlet via a lubricating nipple (5, 52) and a lubricant outlet via one or more outlet openings (19) in a seal boot (17) which seals the radial ball joint (1, 50) and extends between the housing (2, 51) and the ball pivot (6).

13. Radial ball joint (1, 50) according to Claim 12, **characterized in that** the lubricating nipple (5) is arranged centrally with an extent in the axial direction (9) in the cover (4) or laterally in the housing (51), the lower bearing shell (55) having a recess (56) in the region of at least one lubricating groove (57) in the case of a laterally arranged lubricating nipple (52), in order to make an inlet of lubricant possible.

14. Radial ball joint (70) according to one of Claims 1 to 11, **characterized in that** the radial ball joint (70) is of maintenance-free configuration.

## Revendications

1. Articulation à rotule radiale (1, 50, 70) pour un véhicule, l'articulation à rotule radiale (1, 50, 70) comprenant un boîtier (2, 51) destiné à recevoir une rotule d'articulation (11) d'un tourillon à rotule (6) de manière mobile en rotation et en pivotement, dans laquelle, entre une paroi intérieure (10) du boîtier (2, 51) et la rotule d'articulation (11), est disposé un coussinet de palier supérieur (7) annulaire fermé de manière périphérique et s'appuyant contre la rotule d'articulation (11) par une région d'appui (21) pour le support sur palier lisse périphérique de la rotule d'articulation (11) entre son équateur (12) et son pôle supérieur (13), dans laquelle une bague d'étanchéité ronde (8) s'appuyant respectivement de manière périphérique est disposée entre le coussinet de palier supérieur (7), la paroi intérieure (10) du boîtier (2, 51) et un couvercle (4, 53) fermant unilatéralement le boîtier (2, 51), et dans laquelle le coussinet de palier supérieur (7) est serré contre la rotule d'articulation (11) dans la direction axiale (9) au moyen de la bague d'étanchéité ronde (8), **caractérisée en ce que** le coussinet de palier supérieur (7) est réalisé en tant que pièce emboutie en tôle d'acier et comprend plusieurs rainures de lubrification (14) dans la région d'appui (21) contre la rotule d'articulation (11), lesquelles rainures de lubrification traversent une paroi (20) du coussinet de palier supérieur (7) à la manière d'une empreinte et font saillie en tant que bombements (22) sur la région de surface du coussinet de palier supérieur (7) opposée à la région d'appui (21) contre la rotule d'articulation (11), lesquels bombements s'enfoncent dans la bague d'étanchéité ronde (8) à l'état monté de l'articulation à rotule radiale (1) et déforment élastiquement cette bague, agissent en tant que fixation antirotation et empêchent une rotation du coussinet de palier supérieur (7) par rapport à la bague d'étanchéité ronde (8) au moins dans une large mesure.

2. Articulation à rotule radiale (1, 50, 70) selon la revendication 1, **caractérisée en ce que** le coussinet de palier supérieur (7) présente sensiblement en chaque point la même épaisseur de paroi.

3. Articulation à rotule radiale (1, 50, 70) selon la revendication 1 ou 2, **caractérisée en ce que** les rainures de lubrification (14) s'étendent dans un plan passant par l'axe médian (27) du tourillon à rotule (6).

4. Articulation à rotule radiale (1, 50, 70) selon l'une des revendications 1 à 3, **caractérisée en ce que** le coussinet de palier supérieur (7) est formé à partir d'acier de cémentation et sa surface est complètement cémentée.

5. Articulation à rotule radiale (1, 50, 70) selon l'une des revendications précédentes, **caractérisée en ce qu'**un côté frontal (23), tourné vers le pôle supérieur (13) de la rotule d'articulation (11), du coussinet de palier supérieur (7) forme, conjointement avec une surface de butée correspondante (24) du couvercle (4, 53) fermant unilatéralement le boîtier (2, 51), une butée de fin de course pour un déplacement de la rotule d'articulation (11) dans la direction axiale (9).

6. Articulation à rotule radiale (1, 50, 70) selon la revendication 5, **caractérisée en ce que** le coussinet de palier supérieur (7) est disposé de manière radialement espacée de la paroi intérieure (10) du boîtier (2, 51).

7. Articulation à rotule radiale (1, 50, 70) selon l'une des revendications précédentes, **caractérisée en ce qu'**entre la paroi intérieure (10) du boîtier (2) et la rotule d'articulation (11) est disposé un coussinet de palier inférieur (16) formé à partir de tôle d'acier et s'appuyant respectivement contre cette rotule d'articulation par des régions d'appui (25, 26) pour le support sur palier lisse périphérique de la rotule d'articulation (11) sensiblement entre son équateur (12) et un tourillon (18) relié à la rotule d'articulation (11).

8. Articulation à rotule radiale (1, 50, 70) selon la revendication 7, **caractérisée en ce que** le coussinet de palier inférieur (16) est réalisé sous forme de pièce emboutie annulaire fermée de manière périphérique et comprend, dans la région d'appui (26) contre la rotule d'articulation, plusieurs rainures de lubrification (15), lesquelles s'étendent dans un plan passant par l'axe médian (27) du tourillon à rotule (6).

9. Articulation à rotule radiale (1, 50, 70) selon la revendication 7 ou 8, **caractérisée en ce que** le coussinet de palier inférieur (16) est, dans la région d'appui (25) contre la paroi intérieure (10) du boîtier (2), réalisé au moins dans certaines zones en tant que surface d'enveloppe sphérique continue dans la direction périphérique.

10. Articulation à rotule radiale (1, 50, 70) selon la revendication 8 ou 9, **caractérisée en ce que** les rainures de lubrification (15) sont ménagées à la manière d'une empreinte sans enlèvement de copeaux dans une paroi (28) du coussinet de palier inférieur (16).

11. Articulation à rotule radiale (1, 50, 70) selon l'une des revendications 7 à 10, **caractérisée en ce que** le coussinet de palier inférieur (16) s'étend en direction du pôle supérieur (13) de la rotule d'articulation (11) jusqu'au-delà de l'équateur (12) de la rotule d'articulation (11).

12. Articulation à rotule radiale (1, 50) selon l'une des revendications précédentes, **caractérisée en ce que** l'articulation à rotule radiale (1, 50) présente une lubrification à lubrifiant perdu comprenant une entrée de lubrifiant par le biais d'un raccord fileté de lubrification (5, 52) et une sortie de lubrifiant par le biais d'une ou plusieurs ouvertures de sortie (19) dans un soufflet d'étanchéité (17) assurant l'étanchéité de l'articulation à rotule radiale (1, 50) et s'étendant entre le boîtier (2, 51) et le tourillon à rotule (6).

13. Articulation à rotule radiale (1, 50) selon la revendication 12, **caractérisée en ce que** le raccord fileté de lubrification (5) est disposé centralement dans le couvercle (4) avec son étendue dans la direction axiale (9) ou est disposé latéralement dans le boîtier (51), le coussinet de palier inférieur (55) comprenant un évidement (56) dans la région d'au moins une rainure de lubrification (57) en cas de raccord fileté de lubrification (52) disposé latéralement, afin de permettre une entrée de lubrifiant.

14. Articulation à rotule radiale (70) selon l'une des revendications 1 à 11, **caractérisée en ce que** l'articulation à rotule radiale (70) est réalisée de manière à ne pas nécessiter d'entretien.
